# EUROPÄISCHE PATENTANMELDUNG

(11) **EP 0 983 809 A2**
(43) Veröffentlichungstag der Anmeldung: **08.03.2000**
(21) Anmeldenummer: 99116593.7
(22) Anmeldetag: 25.08.1999
(51) Int. Cl.: B21D 53/74, B21D 7/02, E06B 3/673

(54) **Verfahren und Vorrichtung zum Biegen eines Hohlprofiles zur Herstellung eines abstandhalter-Rahmens für Isolierglasscheiben**

(30) Priorität: 29.08.1998 DE 19839444
(71) Anmelder: Bayer Isolierglas- und Maschinentechnik GmbH, 79215 Elzach (DE)
(72) Erfinder: Bayer, Franz, 79215 Elzbach (DE)
(74) Vertreter: Schmitt, Hans, Dipl.-Ing.

(57) **Zusammenfassung**

Zum Biegen eines Hohlprofiles (2), welches ganz oder teilweise aus Kunststoff besteht, dient eine Biegevorrichtung (1) mit einer das Hohlprofil (2) während des Biegens vor dem Biegebereich festlegenden Spannvorrichtung (3) und einer Einrichtung (9) zum Erfassen des in Zuführrichtung hinter dem Biegebereich befindlichen Schenkels (2a), wobei dieser umzubiegende Schenkel (2a) oder umzubiegende Teil des Hohlprofiles (2) gegenüber einem im Biegebereich innenseitig angeordneten Widerlager (10) verschwenkt und gebogen wird. Dabei wird der Biegebereich des Hohlprofiles (2) und zumindest das Widerlager (10) wenigstens zeitweise vor und/oder beim Biegen auf eine Temperatur aufgeheizt, bei welcher die Festigkeit das Hohlprofil (2) bildenden Werkstoffes vermindert wird, so daß der Biegevorgang leicht und präzise erfolgen kann und nach dem Erstarren eine stabile und maßhaltige Ecke vorhanden ist. Zum Aufheizen eignet sich besonders gut auf die Innenseite der Biegestelle und das Widerlager (10) gerichtete Heißluft.

## Beschreibung

Die Erfindung betrifft ein Verfahren zum Biegen eines Hohlprofiles, welches ganz oder teilweise aus Kunststoff besteht, wobei zumindest an dem in Gebrauchsstellung außenseitigen Quersteg eine Metallschicht vorgesehen, eingebettet oder außenseitig angeordnet sein kann, zur Herstellung eines insbesondere mit Trockenmittel gefüllten hohlen Abstandhalter-Rahmens für Isolierglasscheiben, wobei das Hohlprofil einer Biegevorrichtung zugeführt und mittels einer Spannvorrichtung in Zuführrichtung vor dem Biegebereich fixiert und der umzubiegende Schenkel des Hohlprofiles in Zuführrichtung hinter dem Biegebereich ebenfalls erfaßt und gegenüber einem im Biegebereich befindlichen Widerlager verschwenkt und gebogen wird.

Die Erfindung betrifft ferner eine Vorrichtung zum Biegen eines ganz oder teilweise aus Kunststoff bestehenden Hohlprofiles zur Herstellung eines insbesondere mit Trockenmittel gefüllten oder zu füllenden hohlen Abstandhalter-Rahmens für Isolierglasscheiben, mit einer etwa in Zuführrichtung des Hohlprofiles vor dem Biegebereich angeordneten Spannvorrichtung, welche zum Erfassen des vor der Biegung oder dem Biegebereich befindlichen Profilbereiches dient und insbesondere eine einerseits an einem inneren Quersteg und andererseits an einem äußeren Quersteg des Hohlprofiles angreifende innere und äußere Klemmbacke oder dergleichen Halterung aufweist, und mit einer Einrichtung zum Erfassen des umzubiegenden Schenkels sowie mit einem Widerlager zum Fixieren der Innenseite der entstehenden Biegung oder Krümmung und/oder des dort verlaufenden inneren Quersteges des Hohlprofiles, welches Widerlager in Gebrauchsstellung im Biegebereich innenseitig angeordnet ist, insbesondere zur Durchführung des vorstehend genannten Verfahrens.

Ein derartiges Verfahren und eine zu seiner Durchführung dienende Vorrichtung, allerdings zum Biegen von aus Metall bestehenden Hohlprofilen ist aus EP 0 121 873 B1 und aus EP 0 318 748 B2 bereits bekannt und hat sich bewährt. Mit den in diesen Patentschriften offenbarten Vorrichtungen wird ein schnelles und exaktes Biegen von metallischen Hohlprofilen, seien sie schon mit Trockenmittel gefüllt oder noch nicht, ermöglicht.

Es sind inzwischen aber auch Hohlprofile bekannt geworden, die ganz oder teilweise aus Kunststoff bestehen, damit sie eine bessere Isolierung erlauben, also Kältebrücken zwischen den die jeweilige Isolierglasscheibe bildenden Einzelscheiben besser vermeiden, als dies mit metallischen Hohlprofilen und Abstandhalterrahmen möglich ist.

Dabei besteht jedoch die Schwierigkeit, daß Kunststoffe beim Biegen nicht die Biege- und Fließeigenschaften wie Metalle haben und deshalb nach den bisher bekannten Verfahren und mit den bisher bekannten Vorrichtungen nicht mit der Präzision und Sicherheit gebogen werden können, die für einen Abstandhalterrahmen erforderlich sind. Ferner besteht die Gefahr, daß bei dem Biegen der Kunststoff bricht oder splittert.

Ferner ergibt sich bei aus Kunststoff bestehenden Hohlprofilen der eingangs erwähnten Art das Problem, daß sie nach einem Biegevorgang eine lang anhaltende allmähliche Rückstelltendenz haben, die nicht einem Rückfedern von Metall entspricht, dem durch einen exakten Überbiegungswinkel entgegengewirkt werden kann. Vielmehr neigen solche gebogenen Hohlprofile aus Kunststoff zu einer allmählichen Rückverformung entgegen der vorher durchgeführten Biegung, was während der weiteren Verarbeitung von Abstandhalterrahmen aus derartigen Kunststoff-Hohlprofilen störend ist und zu Abweichungen von den jeweils gewünschten Winkelmaßen führen kann.

Es besteht deshalb die Aufgabe, ein Verfahren und eine Vorrichtung der eingangs genannten Art zu schaffen, womit der Vorteil verminderter Kältebrücken durch ganz oder teilweise aus Kunststoff bestehende Hohlprofile beibehalten, diese aber dennoch exakt auf einen gewünschten Winkel gebogen werden können, ohne anschließende Rückstellbewegungen an der Biegestelle in Kauf nehmen zu müssen.

Zur Lösung dieser Aufgabe ist das eingangs genannte Verfahren dadurch gekennzeichnet, daß der Biegebereich des Hohlprofiles und/oder zumindest das Widerlager, um welches das Hohlprofil gebogen wird, wenigstens zeitweise vor und/oder beim Biegen auf eine Temperatur aufgeheizt wird, bei welcher die Festigkeit des das Hohlprofil bildenden oder mitbildenden Kunststoffes vermindert wird.

Es ist bekannt, daß Kunststoffe bei entsprechender Erwärmung weich werden und dann problemlos verformt werden können, ohne Rückstellspannungen aufzubauen. Sind sie dann erkaltet, haben sie wieder eine zufriedenstellende Festigkeit. Durch das erfindungsgemäße Verfahren können also die Winkel und Ecken des Abstandhalterrahmens mit der gewünschten Präzision und dabei gleichzeitig mit relativ geringem Kraftaufwand gebogen und auf einen präzisen Biegewinkel eingestellt werden, der nach dem Erkalten des Biegebereiches dann auch die gewünschte Festigkeit hat.

Besonders zweckmäßig ist es dabei, wenn das Hohlprofil im Biegebereich und zumindest das Widerlager auf die Erweichungs- oder Plazifiziertemperatur des das Hohlprofil bildenden Kunststoffes aufgeheizt wird. Der Biegebereich des Hohlprofiles wird dann so nachgiebig und plastisch, daß die gewünschte exakte Biegung schnell und präzise durchgeführt werden kann, wonach der Kunststoff nach seinem Erkalten dann keinerlei Rückfedertendenzen in die ursprüngliche Lage mehr hat. Dabei macht sich die Erfindung zunutze, daß Kunststoffe in der Regel keinen exakten Schmelzpunkt haben, sondern bei der Erwärmung allmählich immer weicher werden, so daß eine Aufheizung gewählt werden kann, bei der die genannte erleichterte und präzise Biegung gut durchführbar ist, ohne daß das Hohlprofil selbst hinsichtlich seines Querschnittes und seiner Abmessungen im Biegebereich in unerwünschter Weise verformt wird.

Eine besonders zweckmäßige und günstige Verfahrensweise kann dabei darin bestehen, daß die Biegestelle und das Widerlager mit Heißluft angeblasen werden. Dadurch kann eine sehr gezielte und insofern energiesparende Aufheizung durchgeführt werden, ohne daß aufwendige Heizvorrichtungen unmittelbar an der Biegestelle oder an für das Biegen wesentlichen Maschinenteilen installiert werden müssen. Es genügen entsprechende Luftführungen, um eine exakte Zufuhr der Heiß- und Heizluft an die gewünschten Stellen zu ermöglichen. Dabei kann die eigentliche Energiequelle mit der entsprechenden Heizleistung außerhalb des häufig unter beengten Platzverhältnissen befindlichen Biegebereiches angeordnet sein.

Eine weitere Verbesserung des Verfahrens kann vorsehen, daß die Heißluft durch Kanäle oder Bohrungen der Spannvorrichtung zum Fixieren des Hohlprofiles vor der Biegestelle etwa parallel zu dem eingespannten Hohlprofil vor seiner Biegestelle zugeführt und ausgeblasen wird. Dadurch erhält nicht nur die Spannvorrichtung eine Doppelfunktion, sondern es können auch separate Zuführleitungen für die Heißluft vermieden werden. Gleichzeitig kann dadurch die Spannvorrichtung etwas aufgeheizt und vorgeheizt werden, so daß bei dem intermetierenden Betrieb, wie er beim Biegen solcher Abstandhalterrahmen notgedrungen auftritt, weil eine Ecke nach der anderen gebogen werden muß, die zwischendurch unterbrochene Zufuhr der Heißluft nicht dazu führt, daß die erneut eingeschaltete Luft auf ihrem Weg zu der zu beheizenden Stelle unnötig abgekühlt wird. Die erneut eingeschaltete Heißluftzufuhr ergibt, daß die Heizluft dann schon durch eine von dem vorhergehenden Vorgang vorgewärmte Spannvorrichtung zugeführt werden kann und dadurch ihre gewünschte Heiztemperatur behält.

Für ein gutes Biegeergebnis ist es günstig, wenn der Heißluftstrom etwa in Zuführrichtung des Werkstückes oder Hohlprofiles in den Innenbereich der sich bildenden Biegung und gleichzeitig gegen das Widerlager gerichtet und dadurch die Innenseite der Biegung des Hohlprofiles geheizt wird. Einerseits wird dadurch das Werkstück schon während der Zuführung zur Biegestelle hin etwas vorgeheizt, so daß auch ein Teil des Profiles, der anschließend um das Widerlager herumgebogen wird, erwärmt wird, während andererseits auch das Widerlager oder der Biegedorn selbst und während des eigentlichen Biegevorgangs der vor der Biegung befindliche Teil des Hohlprofiles in ausreichendem Maße beheizt werden, um den Kunststoff soweit zu erweichen, daß eine präzise Formung der Biegung bei gleichzeitiger Beibehaltung der Maßhaltigkeit der Seitenstege zwischen deren Auflagefläche und Niederhalter ermöglicht wird. Die Heißluft kann schon während der Zuführung des Hohlprofiles in Biegeposition, zumindest während des letzten Teiles dieser Zuführung zugeführt und dadurch der hinter und in dem Biegebereich befindliche Teil des Hohlprofiles vorgeheizt werden. Somit sind auch die Nachbarbereiche der eigentlichen Biegung und Biegestelle etwas wärmer und weicher und bilden Übergänge zu dem nicht erweichten oder plastifizierten Teil des Profiles, so daß entsprechende Zug- und/oder Stauchspannungen innerhalb des Werkstoffes des Hohlprofiles aufgenommen und ausgeglichen werden können.

Besonders zweckmäßig ist es, wenn auch die Außenseite des Biegebereiches beheizt, insbesondere mit Heißluft beaufschlagt wird. Dadurch kann auch der beim Biegen zugbeanspruchte Bereich des Hohlprofiles etwas erweicht oder plastifiziert werden, so daß er geschmeidiger wird und der Biegevorgang entsprechend schnell und genau und unter Entfernung von Rückstellspannungen erfolgen kann.

Um die Heizluft auf einfache Weise aufheizen und auch mit genügender Strömungsgeschwindigkeit auf dem zu heizenden Biegebereich strömen lassen zu können, kann Preßluft durch einen Wärmetauscher, insbesondere einen elektrisch aufgeheizten Wärmetauscher geleitet und dann als Heißluft zu dem Biegebereich geleitet werden. Preßluft ist praktisch in jedem Betrieb ständig vorhanden, so daß sie einfach abgezweigt oder aber auch aus entsprechenden Preßluftflaschen entnommen werden. Somit werden keine spezielle Kompressoren zur Erzeugung der jeweiligen Preßluft benötigt, die aber auch erforderlichenfalls eingesetzt werden könnten.

Die Erfindung macht sich also bei Anwendung einzelner oder mehrerer der vorbeschriebenen Maßnahmen und Verfahrensschritte die Erkenntnis zu nutze, daß ein ganz oder teilweise aus Kunststoff bestehendes Hohlprofil besonders gut gebogen werden kann, wenn der Biegebereich soweit erwärmt wird, daß die dem Kunststoff eigentlich innewohnenden Spannungen oder Widerstände praktisch beseitigt sind, die sich nach dem Erkalten dann aber wieder einstellen. Somit kann durch das Aufheizen der Biegestelle eine präzise Biegung des Hohlprofiles durchgeführt werden, die anschließend nach dem Erkalten eine entsprechend stabile und maßhaltige Ecke ergibt, so daß insgesamt ein Abstandhalterrahmen aus Kunststoff geschaffen werden kann, der das gewünschte Maß auch in den Ecken und Winkeln beibehält und ein besserer Schutz gegen Wärmeübergang als ein entsprechender metallischer Abstandhalterrahmen ist, also Kältebrücken vermeidet.

Die eingangs genannte Vorrichtung ist zur Lösung der Aufgabe dadurch gekennzeichnet, daß in Biegebereich zumindest an der Innenseite der Biegung des Hohlprofiles eine Heizung für diesen Biegebereich und/oder für das Widerlager vorgesehen ist. Damit kann der Biegebereich so aufgeheizt werden, daß ein ganz oder teilweise aus Kunststoff bestehendes Hohlprofil hinsichtlich seines Werkstoffes weicher und nachgiebiger wird und problemlos gebogen werden kann, ohne daß durch diesen Biegevorgang Rückstellspannungen oder Rückstelltendenzen zurückbleiben. Nach dem Erkalten ist eine solche Biegestelle stabil und dauerhaft.

Besonders günstig ist es dabei, wenn eine Heißluft-Heizung für den Biegebereich und das Widerlager vorgesehen ist. Mittels Heißluft kann das Aufheizen sowohl hinsichtlich der Temperatur als auch in räumlicher Hinsicht genau erfolgen, ohne daß innerhalb der Biegevorrichtung oder dem Widerlager spezielle Heizgeräte oder Heizeinrichtungen eingebaut werden müßten. Heißluft läßt sich sehr einfach und gezielt zuführen.

Besonders günstig ist es bei einer derartigen Vorrichtung, wenn ein oder mehrere Mündungen von Heißluft-Kanälen auf die Biegestelle, insbesondere die Innenseite und/oder die Außenseite der Biegung und auf das Widerlager gerichtet sind. Dadurch können exakt die Stellen und Teile beheizt werden, die für die Verformung des Hohlprofiles beim Biegen besonders wichtig sind, während sonstige Bereiche unbeheizt bleiben können.

Zumindest die an dem die spätere Innenseite des Abstandhalter-Rahmens bildenden inneren Quersteg angreifende innere Klemmbacke oder dergleichen Halterung oder Anlage der vor dem Biegebereich befindlichen Spannvorrichtung kann den oder die Luftkanäle für die Heiz- und Heißluft enthalten, die mit ihrer Mündung auf den Biegebereich und insbesondere die Innenseite der Biegung und das Widerlager gerichtet sind. Dadurch erhält die Spannvorrichtung und insbesondere deren innere Klemmbacke oder Halterung oder Anlage für das Profil eine zusätzliche Funktion als Führung und Leitung für die Heißluft. Ferner kann dadurch die das Hohlprofil vor dem Biegebereich haltende Spannvorrichtung und insbesondere ihre an der Innenseite des Hohlprofiles anliegende Klemmbacke oder Halterung von der zugeführten Heißluft durchströmt und dadurch erwärmt werden, so daß der Werkstoff des Hohlprofiles von der beheizten Biegestelle ausgehend auch nach den Seiten hin noch etwas erwärmt ist und sich so ein allmählicher Übergang zum kalten Teil und Bereich des Hohlprofiles ergibt. Ferner wird dadurch erreicht, daß nach einer Unterbrechung der Heißluftzufuhr, beispielsweise nach einem erneuten Vorschub des Hohlprofiles die dann wieder eingeschaltete Heißluft durch eine bereits vorgewärmte Spannvorrichtung strömt und dort nicht wieder abkühlt, so daß auch die Bearbeitungsgeschwindigkeit trotz der beim Vorschieben von einem zum nächsten Biegebereich erfolgenden Unterbrechung nicht verzögert wird. Die Wärmekapazität der Spannvorrichtung reicht aus, um ein zu starkes Abkühlen während einer solchen Unterbrechung zu vermeiden, so daß die dann wieder eingeschaltete Heißluft praktisch sofort die erforderliche Heiztemperatur hat.

Günstig ist es, wenn mehrere parallele Luftkanäle insbesondere nahe der dem Hohlprofil zugewandten Oberfläche der inneren Klemmbacke angeordnet sind und in Zuführrichtung des Hohlprofiles verlaufen und wenn die diese Heißluftkanäle enthaltende Klemmbacke oder dergleichen mit ihrem die Mündungen der Luftkanäle oder Bohrungen aufweisenden Ende bis an oder nah an das Widerlager reicht. Dadurch kann einerseits eine gute Abstützung des Hohlprofiles vor dem Biegebereich erzielt und andererseits vermieden werden, daß die Heißluft über eine zu große Strecke durch die freie Atmosphäre geblasen werden muß und dabei zuviel Wärme verlieren könnte.

Eine weitere zweckmäßige Ausgestaltung der erfindungsgemäßen Vorrichtung kann darin bestehen, daß die Klemmbacke oder dergleichen eine quer zu den insbesondere als Bohrung ausgebildeten Heißluftkanälen orientierte, mit diesen verbundene Zuführöffnung für die Heißluft hat und über eine Koppelung mit einer Halterung verbunden ist, in welcher eine Bohrung oder ein Kanal für die Heißluftzufuhr angeordnet ist, die in Gebrauchsstellung mit der Zuführöffnung der Klemmbacke oder dergleichen ganz oder zumindest teilweise in Überdeckung ist und daß die Klemmbacke gegebenenfalls zur Anpassung an unterschiedliche Abmessungen der zu biegenden Hohlprofile austauschbar ist. Ist die Klemmbacke beschädigt oder soll ein Hohlprofil anderer Breite gebogen werden, kann sie also auf einfache Weise gegen eine neue oder anders bemessene Klemmbacke ausgetauscht werden, deren Zuführöffnung dann in Überdeckung mit der Bohrung oder dem Kanal für die Heißluftzufuhr gelangt, so daß es keiner besonderen Maßnahmen bedarf, wenn ein breiteres oder schmaleres Hohlprofil gebogen werden muß als die Klemmbacke als solche aus ihrer Halterung zu entnehmen und durch eine entsprechend bemessene andere Klemmbacke zu ersetzen.

Die insbesondere als Bohrungen ausgebildeten parallelen Einzelkanäle können für eine gleichmäßige Temperaturverteilung hinter der Anlagefläche der Klemmbacke etwa gleichmäßig verteilt angeordnet sein. Damit wird nicht nur die Klemmbacke gleichmäßig vorgeheizt, sondern vor allem auch im Biegebereich eine gleichmäßige Heizung über die gesamte Breite des innenliegenden Quersteges des Hohlprofiles und des dort befindlichen Widerlagers erzielt. Dadurch können unterschiedliche Temperaturen im Biegebereich vermieden werden, die unter Umständen zu unterschiedlichen Biegeergebnissen über die Breite des Quersteges führen könnten. Entsprechend genau und exakt ist die erzielte Biegung und ihr Winkel über die gesamte Breite des Hohlprofiles und des dadurch gebildeten Abstandhalterrahmens.

Weitere Ausgestaltungen der erfindungsgemäßen Vorrichtung sind Gegenstand weiterer Ansprüche.

Anspruch 17 enthält Merkmale und Maßnahmen betreffend das Aufheizen der Heißluft mit Hilfe eines Wärmetauschers, der bevorzugt als Metall- oder Aluminiumblock mit entsprechenden Kanälen und Heizelementen gestaltet sein kann.

Anspruch 18 betrifft die Möglichkeit, an der Außenseite der Biegestelle das ganz oder teilweise aus Kunststoff bestehende Hohlprofil während des Biegevorganges in einer Weise zu bearbeiten, wie es aus EP 0 318 748 B2 und aus EP 0 121 873 B1 bekannt ist, wobei es dabei wiederum besonders günstig ist, wenn der Biegebereich und dabei speziell auch die Außenseite des Biegebereiches beheizt wird.

Anspruch 19 betrifft eine in Vorschubrichtung hinter dem Biegebereich angeordnete Kühlung, durch die die Erweichung des Kunststoffes nach dem Biegevorgang möglichst schnell rückgängig gemacht werden kann.

Anspruch 20 gibt dabei eine konstruktive Möglichkeit an, wie die zum Erzeugen der Heißluft dienende Preßluft auch als Kühlluft nutzbar gemacht werden kann.

Insgesamt werden ein Verfahren und eine Vorrichtung vorgeschlagen, womit an sichbisher schonbekannte Biegeverfahren und -vorrichtungen für aus Metall bestehende Hohlprofile auch für solche, die ganz oder teilweise aus Kunststoff bestehen, nutzbar gemacht werden können, in dem zusätzlich der Biegebereich in der beschriebenen Weise gezielt soweit aufgeheizt wird, daß der Kunststoff des Hohlprofiles der Verformung beim Biegen keinen oder keine nennenswerten Widerstand entgegensetzt, aber seine Querschnittsform und Abmessung, insbesondere bezüglich der Breite und der Parallelität der als Anlage für die Einzelscheiben dienenden Seitenstege beibehält.

Nachstehend ist ein Ausführungsbeispiel der Erfindung anhand der Zeichnung näher beschrieben. Es zeigt in zum Teil schematisierter Darstellung:
- Fig.1: eine Draufsicht einer erfindungsgemäßen Vorrichtung zum Biegen eines zumindest aus Kunststoff bestehenden Hohlprofiles mit einer vor dem Biegebereich angeordneten Spannvorrichtung, einem an der Innenseite des Biegebereiches angeordneten, im Ausführungsbeispiel mit der Biegebewegung mitschwenkbaren Widerlager und mit einer Einrichtung zum Erfassen des umzubiegenden Schenkels, wobei das Hohlprofil teilweise gebogen ist, seine Ausgangsstellung und seine Endstellung aber auch mit unterbrochenen Linien angedeutet sind,
- Fig.2: in vergrößertem Maßstab den Biegebereich mit dem Widerlager und einem Teilschnitt durch eine Klemmbacke der Spannvorrichtung im Bereich eines auch das Widerlager und die Innenseite der Biegung gerichteten Heißluft-Kanales sowie
- Fig.3: einen Querschnitt der Vorrichtung und des zu biegenden Hohlprofiles im Bereich der Zufuhr der Heiz- und Heißluft und vor dem Biegebereich.

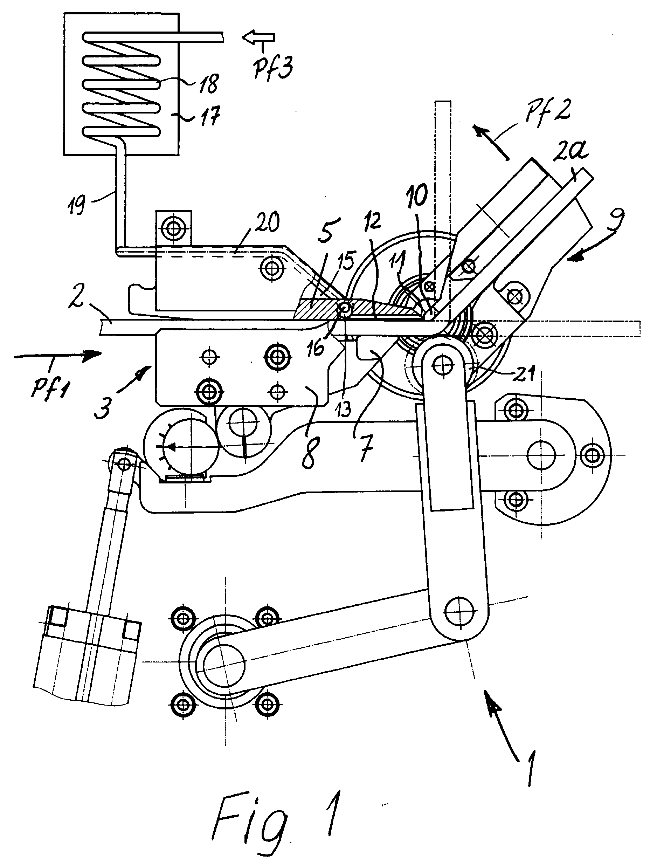

Eine im ganzen mit 1 bezeichnete Vorrichtung dient zum Biegen eines ganz oder teilweise aus Kunststoff bestehenden Hohlprofiles 2 und entspricht in ihrem Aufbau und in ihrer Wirkungsweise, was die mechanischen Teile betrifft, etwa der Vorrichtung zum Biegen eines Hohlprofiles gemäß EP 0 318 748 B2 oder EP 0 121 873 B1, Figur 1.

Das Hohlprofil 2 kann dabei schon während des Biegevorganges mit Trockenmittel gefüllt sein oder es wird anschließend damit gefüllt, damit es als Abstandhalter-Rahmen für Isolierglasscheiben geeignet ist. Ferner sind Fälle denkbar, in denen das Hohlprofil 2 ohne Trockenmittel bleibt.

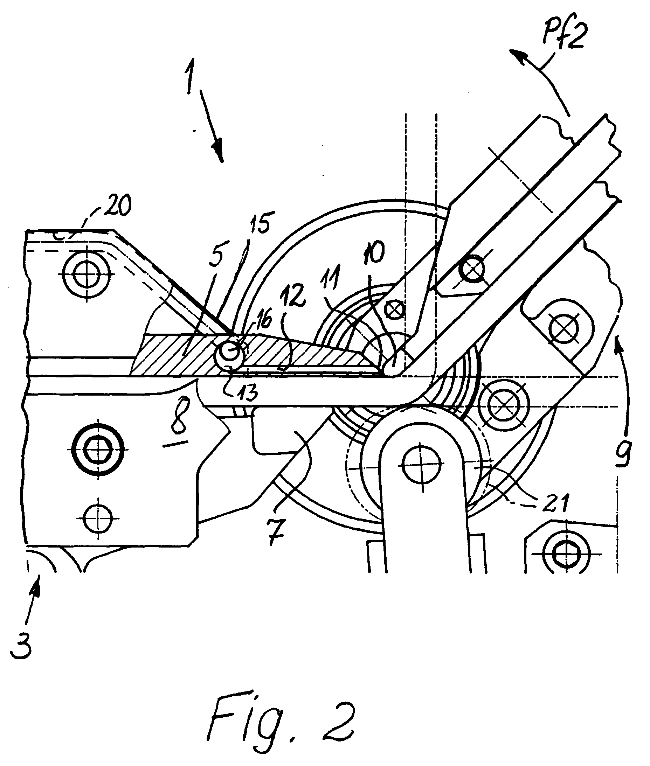

In den Figuren 1 und 2 erkennt man deutlich den Biegebereich, in welchem das Hohlprofil 2 durch den Biegevorgang gekrümmt wird und in Figur 1 und 2 eine Teilkrümmung aufweist. Mit strichpunktierten Linien ist dabei auch der ursprünglich gestreckte Zustand sowie der um einen rechten Winkel gebogene Endzustand dargestellt. Es können aber auch andere als rechte Winkel erzeugt werden.

In Zuführrichtung des Hohlprofiles 2 vor diesem Biegebereich ist eine Spannvorrichtung 3 zum Erfassen des vor der Biegung oder dem Biegebereich befindlichen Teiles des Profiles 2 vorgesehen, womit also das Profil 2 während des Biegevorganges fixiert wird. Diese Spannvorrichtung 3 hat eine an einem inneren Quersteg 4 des Hohlprofiles 2 angreifende Klemmbacke 5 und eine an einem äußeren Quersteg 6 angreifende Klemmbacke 7 und ferner ist in diesem Bereich der Spannvorrichtung 3 auch ein Niederhalter 8 für das Hohlprofil 2 zu erkennen.

Ferner weist die Vorrichtung 1 eine im ganzen mit 9 bezeichnete Einrichtung zum Erfassen des umzubiegenden Schenkels 2a des Hohlprofiles 2 und ein damit mitschwenkbares Widerlager 10 zum Fixieren der Innenseite der entstehenden Biegung oder Krümmung auf. Das Widerlager 10 beaufschlagt also den dort an der Innenseite der entstehenden Biegungverlaufenden inneren Quersteg 4 des Hohlprofiles 2. Anstelle eines solchen mitschwenkbaren Widerlagers 10 wäre auch ein Widerlager gemäß Figur 2 der EP 0 121 873 B1 denkbar.

Im Biegebereich ist im Ausführungsbeispiel an der Innenseite der Biegung des Hohlprofiles 2, also im Bereich seines inneren Quersteges 4, eine im folgenden näher zu beschreibende Heizung für den Biegebereich des Hohlprofiles selbst und für das Widerlager 10 vorgesehen. Mit einer solchen Heizung kann der Kunststoff, aus welchem das Hohlprofil 2 besteht, soweit erweicht werden, daß er leicht und ohne Hinterlassung von Rückstellspannungen verformt, also auch gebogen werden kann, so daß nach dem anschließenden Erkalten das Hohlprofil 2 eine stabile Ecke aufweist. Da diese Ecke in erweichtem Zustand des Werkstoffes gebildet wird, besteht auch nicht die Gefahr eines Aufplatzens oder Splittern oder Reißens und darüber hinaus können auch die Seitenstege 11 ihre glatte und parallele Form und ihren korrekten Abstand behalten, so daß sie später eine ebene und dichte Anlage für die Einzelscheiben einer Isolierglasscheibe bilden können.

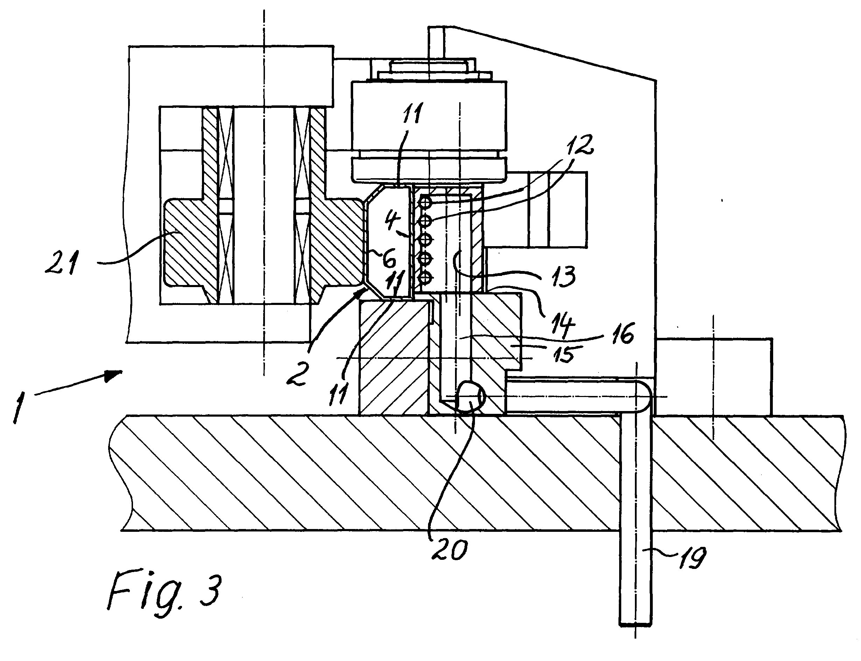

Im Ausführungsbeispiel ist eine Heißluft-Heizung für den Biegebereich und das Widerlager 10 vorgesehen. Dazu sind mehrere Mündungen 11 (Fig. 2) von Heißluftkanälen 12 (Fig. 3) auf die Biegestelle, nämlich die Innenseite der Biegung, und auf das Widerlager 10 gerichtet. Dies wird besonders deutlich anhand der Figur 2 in welcher ein derartiger Heißluftkanal 12 mit seiner gegen das Widerlager 10 gerichteten Mündung 11 im Längsschnitt deutlich erkennbar ist.

Dabei enthält die an dem die spätere Innenseite des Abstandhalterrahmens bildenden inneren Quersteg 4 angreifende innere Klemmbacke 5 der in Zuführrichtung des Hohlprofiles 2 vor dem Biegebereich befindliche Spannvorrichtung 3 diese Luftkanäle 12 für die Heiz- und Heißluft, die alle mit ihrer Mündung 11 auf den Biegebereich und die Innenseite der Biegung und das Widerlager 10 gerichtet sind. Anhand der Figur 3 wird deutlich, daß auf diese Weise Heißluft über die gesamte Querschnittserstreckung des inneren Quersteges 4 und somit auch über die gesamte Höhe des Widerlagers 10 zugeführt wird und eine gleichmäßige Erwärmung beziehungsweise Aufheizung bewirkt. Dabei sind mehrere parallele Luftkanäle 12 nahe der dem Hohlprofil 2 zugewandten Oberfläche der inneren Klemmbacke 5 angeordnet und verlaufen in der in Figur 1 durch den Pfeil Pf1 angedeuteten Zuführrichtung des Hohlprofiles 2. Auch die Heißluft strömt also in dieser Richtung, bevor sie nach dem Austritt aus den Mündungen 11 auf das Widerlager 10 und den inneren Bereich der Biegung und dort vor allem den inneren Quersteg 4 des Hohlprofiles 2 trifft.

Damit die Heißluft möglichst effektiv und ohne nennenswerte Abkühlung nutzbar wird, reicht diese die Heißluftkanäle 12 enthaltende Klemmbacke 5 mit ihrem die Mündungen 11 aufweisenden Ende bis an beziehungsweise nahe an das Widerlager 10, was vor allem in Figur 2 deutlich erkennbar ist. Da das Widerlager 10 während seiner Anströmung mit Heißluft gleichzeitig eine der Biegebewegung entsprechende Verschwenkung oder Verdrehung entsprechend dem gekrümmten Pfeil Pf2 in Figur 2 durchführt, wird während des Biegens auch ständig ein entsprechend gut erwärmter Bereich des Widerlagers 10 mit dem innenliegenden Quersteg 4 des Hohlprofiles 2 in Kontakt gebracht. Drüber hinaus wird dadurch die anströmende Heißluft an die Stelle geleitet, wo das Widerlager 10 und der innenliegende Quersteg 4 miteinander in Berührung kommen, so daß an dieser Stelle eine besonders effektive Aufheizung erfolgen kann.

Bei gleichzeitiger Betrachtung der Figuren 2 und 3 erkennt man, daß die die Kanäle 12 enthaltende Klemmbacke 5 eine quer zu den als Bohrungen ausgebildeten Heißluftkanälen 12 orientierte, mit diesen verbundene Zuführöffnung 13 mit relativ großem Durchmesser hat und über eine Koppelung 14 mit einer Halterung 15 verbunden ist, in welcher eine Bohrung 16 oder ein Kanal für die Heißluftzufuhr mit etwas kleinerem Durchmesser angeordnet ist, die in Gebrauchsstellung mit der Zuführöffnung 13 der Klemmbacke 5 gemäß Figur 1 und 2 in Überdeckung ist. Die Klemmbacke 5 kann dabei leicht ausgetauscht und ausgewechselt werden, um zum Beispiel eine Anpassung an unterschiedlich breite Hohlprofile 2 zu ermöglichen. Wichtig ist nur, daß jede jeweils austauschbare Klemmbacke 5 die entsprechende Zuführöffnung 13 hat, die die Bohrung oder den Kanal 16 in Gebrauchsstellung überdeckt, so daß die zuströmende Heißluft in die Kanäle 12 gelangt. Dabei sind diese als Bohrungen ausgebildeten parallelen Heißluftkanäle 12 für eine gleichmäßige Temperaturverteilung hinter der Anlagefläche der Klemmbacke 5 etwa gleichmäßig verteilt angeordnet, haben also untereinander und von dem anliegenden Hohlprofil 2 beziehungsweise der entsprechenden Anlagefläche der Klemmbacke 5 jeweils gleiche Abstände. Außerdem haben sie übereinstimmende Durchmesser, wobei aber die Gesamtquerschnittsfläche der Heißluftkanäle 12 kleiner als der Querschnitt der Zuführöffnung 13 ist, so daß die zuströmende Heißluft gleichmäßig auf alle Kanäle 12 verteilt wird.

In Figur 1 ist ein Wärmetauscher 17 angedeutet, der zum Aufheizen von gemäß dem Pfeil Pf3 zuströmender Preßluft dient, die durch eine entsprechende gewundene Leitung 18 eine ausreichende Verweilzeit innerhalb des Wärmetauschers 17 hat, um die gewünschte Heiztemperatur zu erhalten. Der Wärmetauscher 17 kann dabei ein Block aus Metall sein, welcher Heizspiralen und/oder Heizstäbe enthält, was in der Zeichnung nicht näher dargestellt ist. Von diesem Wärmetauscher 17 aus gelangt die erhitzte Preßluft über eine Leitung 19 zu der Spannvorrichtung 3 und durch einen Leitungskanal 20 schließlich zu der Bohrung 16, die in Überdeckung mit der Zuführöffnung 13 ist.

In vorteilhafter Weise wird also der eigentliche Heizvorgang außerhalb und mit Abstand zum Biegebereich der Vorrichtung 1 durchgeführt und es können zur Vorrichtung 1 gehörende Teile mitbenutzt werden, um die Heißluft an die zu beheizende Stelle zu bringen, so daß der Biegebereich nicht mit zusätzlichen Installationen versehen werden muß.

An der Außenseite der Biegestelle erkennt man im Ausführungsbeispiel noch ein unter Anpreßdruck relativ zu dem Widerlager 10 und dem Hohlprofil 2 bewegbares und an die Außenseite des Profiles 2 anpreßbares werkzeug in Form einer Druckrolle 21, die gemäß Figur 3 schmaler als das Hohlprofil 2 ist, so daß sie unter Beaufschlagung des äußeren Quersteges 6 zwischen die Seitenstege 11 des Hohlprofiles 2 eintauchen kann, wie es aus EP 0 318 748 B2 bekannt ist. Dies ist besonders dann zweckmäßig, wenn in dem äußeren Quersteg 6 eine Metalleinlage vorgesehen ist oder dieser Steg 6 aus Metall besteht.

Hinter dem Biegebereich kann eine nicht näher dargestellte Kühlung, beispielsweise mittels kalter Blasluft vorgesehen sein. Dies könnte durch Zuleitung von Preßluft geschehen, wobei in Strömungsrichtung der Preßluft gesehen vor der Heizvorrichtung und dem Wärmetauscher 17 eine Abzweigung für die Preßluft angeordnet wird, durch welche kühle Preßluft in den Bereich des Hohlprofiles hinter der Biegestelle geleitet werden kann. Entsprechend schnell kann das zunächst unter Erwärmung verformte Hohlprofil wieder zum Erkalten und Erstarren gebracht werden, so daß es die erforderliche Steifheit und Stabilität auch im Biegebereich erhält.

Mit der vorbeschriebenen Vorrichtung ist also ein Biegen eines Hohlprofiles 2, welches ganz oder teilweise aus Kunststoff besteht möglich, in dem der Biegebereich des Hohlprofiles 2 und zumindest das dort anliegende und wirksame Widerlager 10, um welches das Hohlprofil 2 gebogen wird, wenigstens zeitweise vor und/oder beim Biegen auf eine Temperatur aufgeheizt wird, bei welcher die Festigkeit des das Hohlprofil bildenden oder mitbildenden Werkstoffes so vermindert wird, daß der Biegevorgang leicht und präzise und ohne die Gefahr eines Splitterns oder Aufplatzens oder Aufreißens des Hohlprofiles 2 erfolgen kann. Dabei wird das Hohlprofil 2 im Biegebereich zweckmäßigerweise auf die Erweichungs- oder Plastizifiertemperatur des Kunststoffes aufgeheizt und das Widerlager 10 nimmt etwa dieselbe Temperatur an. Dies geschieht dadurch, daß die Biegestelle und das Widerlager 10 mit Heißluft angeblasen werden, welche Heißluft durch die schon beschriebenen Kanäle und Bohrungen der Spannvorrichtungen 3 und dabei ihrer Klemmbacke 5 zugeführt werden.

Dabei kann die Heißluft schon während der Zuführbewegung des Hohlprofiles 2 in seine Biegeposition ausgeblasen werden, so daß auch ein während des Biegens hinter dem Biegebereich befindlicher Teil des Hohlprofiles zumindest vorgeheizt wird. Es ergibt sich dadurch von der Biegestelle nach beiden Seiten ein allmählicher Temperaturübergang innerhalb des Hohlprofiles 2, so daß es nicht durch Beschädigungen aufgrund zu großer Temperaturunterschiede kommt. Das aufgeheizte Material erlaubt dabei die beim Biegen auftretenden Stauchungen, Längungen, Verformungen und Fließbewegungen, ohne daß dadurch nennenswerte Spannungen und insbesondere Rückstellspannungen an der Biegung zurückbleiben. Nach dem Erkalten hat die Ecke des gebogenen Kunststoffprofiles 2 eine hohe Festigkeit und Maßhaltigkeit.

Zum Biegen eines Hohlprofiles 2, welches ganz oder teilweise aus Kunststoff besteht, dient eine Biegevorrichtung 1 mit einer das Hohlprofil 2 während des Biegens vor dem Biegebereich festlegenden Spannvorrichtung 3 und einer Einrichtung 9 zum Erfassen des in Zuführrichtung hinter dem Biegebereich befindlichen Schenkels 2a, wobei dieser umzubiegende Schenkel 2a oder umzubiegende Teil des Hohlprofiles 2 gegenüber einem im Biegebereich innenseitig angeordneten Widerlager 10 verschwenkt und gebogen wird. Dabei wird der Biegebereich des Hohlprofiles 2 und zumindest das Widerlager 10 wenigstens zeitweise vor und/oder beim Biegen auf eine Temperatur aufgeheizt, bei welcher die Festigkeit das Hohlprofil 2 bildenden Werkstoffes vermindert wird, so daß der Biegevorgang leicht und präzise erfolgen kann und nach dem Erstarren eine stabile und maßhaltige Ecke vorhanden ist. Zum Aufheizen eignet sich besonders gut auf die Innenseite der Biegestelle und das Widerlager 10 gerichtete Heißluft.

## Patentansprüche

1. Verfahren zum Biegen eines Hohlprofiles (2), welches ganz oder teilweise aus Kunststoff besteht, wobei zumindest an dem in Gebrauchsstellung außenseitigen Quersteg eine Metallschicht vorgesehen, eingebettet oder außenseitig angeordnet sein kann, zur Herstellung eines insbesondere mit Trockenmittel gefüllten hohlen Abstandhalter-Rahmen für Isolierglasscheiben, wobei das Hohlprofil einer Biegevorrichtung (1) zugeführt und mittels eine Spannvorrichtung (3) in Zuführrichtung vor dem Biegebereich fixiert und der umzubiegende Schenkel des Hohlprofiles in Zuführrichtung hinter dem Biegebereich ebenfalls erfaßt und gegenüber einem im Biegebereich befindlichen Widerlager (10) verschwenkt und gebogen wird, **dadurch gekennzeichnet**, daß der Biegebereich des Hohlprofiles (2) und/oder zumindest das Widerlager (10), um welches das Hohlprofil (2) gebogen wird, wenigstens zeitweise vor und/oder beim Biegen auf eine Temperatur aufgeheizt wird, bei welcher die Festigkeit des das Hohlprofil (2) bildenden oder mitbildenden Kunststoffes vermindert wird.

2. Verfahren nach Anspruch 1, dadurch gekennzeichnet, daß das Hohlprofil (2) im Biegebereich auf die Erweichungs- oder Plastifiziertemperatur des das Hohlprofil bildenden Kunststoffes aufgeheizt wird.

3. Verfahren nach Anspruch 1 oder 2, dadurch gekennzeichnet, daß die Biegestelle und das Widerlager (10) mit Heißluft angeblasen werden.

4. Verfahren nach einem der Ansprüche 1 bis 3, dadurch gekennzeichnet, daß die Heißluft durch Kanäle oder Bohrungen der Spannvorrichtung (3) zum Fixieren des Hohlprofiles vor der Biegestelle etwa parallel zu dem eingespannten Hohlprofil vor seiner Biegestelle zugeführt und ausgeblasen wird.

5. Verfahren nach einem der Ansprüche 1 bis 4, dadurch gekennzeichnet, daß der Heißluftstrom etwa in Zuführrichtung des Werkstückes oder Hohlprofiles in den Innenbereich der sich bildenden Biegung und gleichzeitig gegen das Widerlager gerichtet und dadurch die Innenseite der Biegung des Hohlprofiles geheizt wird.

6. Verfahren nach einem der Ansprüche 1 bis 5, dadurch gekennzeichnet, daß die Heißluft schon während der Zuführung des Hohlprofiles (2) in Biegeposition, zumindest während des letzten Teiles dieser Zuführung zugeführt und dadurch der hinter und in dem Biegebereich befindliche Teil des Hohlprofiles vorgeheizt wird.

7. Verfahren nach einem der vorstehenden Ansprüche, dadurch gekennzeichnet, daß auch die Außenseite des Biegebereiches beheizt, insbesondere mit Heißluft beaufschlagt wird.

8. Verfahren nach einem der Ansprüche 1 bis 7, dadurch gekennzeichnet, daß Preßluft durch einen Wärmetauscher, insbesondere einen elektrisch aufgeheizten Wärmetauscher geleitet und dann als Heißluft zu dem Biegebereich geleitet wird.

9. Vorrichtung (1) zum Biegen eines ganz oder teilweise aus Kunststoff bestehenden Hohlprofiles (2) zur Herstellung eines insbesondere mit Trockenmittel gefüllten oder zu füllenden hohlen Abstandhalter-Rahmens für Isolierglasscheiben, mit einer etwa in Zuführrichtung des Hohlprofiles (2) vor dem Biegebereich angeordneten Spannvorrichtung (3), welche zum Erfassen des vor der Biegung oder dem Biegebereich befindlichen Profilbereiches dient und insbesondere einerseits an einem inneren Quersteg (4) und andererseits an einem äußeren Quersteg (6) des Hohlprofiles (2) angreifende innere und äußere Klemmbacken (5; 7) oder dergleichen Halterungen aufweist, und mit einer Einrichtung (9) zum Erfassen des umzubiegenden Schenkels (2a) sowie mit einem Widerlager (10) zum Fixieren der Innenseite der entstehenden Biegung oder Krümmung und/oder des dort verlaufenden inneren Quersteges (4) des Hohlprofiles (2), welches Widerlager (10) in Gebrauchsstellung im Biegebereich innenseitig angeordnet ist, insbesondere zur Durchführung des Verfahrens nach einem der vorstehenden Ansprüche, **dadurch gekennzeichnet**, daß im Biegebereich zumindest an der Innenseite der Biegung des Hohlprofiles (2) eine Heizung für diesen Biegebereich und/oder für das Widerlager (10) vorgesehen ist.

10. Vorrichtung nach Anspruch 9, dadurch gekennzeichnet, daß eine Heißluft-Heizung für den Biegebereich und das Widerlager (10) vorgesehen ist.

11. Vorrichtung nach Anspruch 9 oder 1 0, dadurch gekennzeichnet, daß ein oder mehrere Mündungen (11) von Heißluft-Kanälen (12) auf die Biegestelle, insbesondere die Innenseite und/oder die Außenseite der Biegung, und auf das Widerlager (10) gerichtet sind.

12. Vorrichtung nach einem der Ansprüche 9 bis 11, dadurch gekennzeichnet, daß zumindest die an dem die spätere Innenseite des Abstandhalter-Rahmens bildenden inneren Quersteg (4) angreifende innere Klemmbacke (5) oder dergleichen Halterung oder Anlage der vor dem Biegebereich befindlichen Spannvorrichtung (3) den oder die Luftkanäle (12) für die Heiz- und Heißluft enthält, die mit ihrer Mündung (11) auf den Biegebereich und insbesondere die Innenseite der Biegung und das Widerlager (10) gerichtet sind.

13. Vorrichtung nach einem der Ansprüche 9 bis 12, dadurch gekennzeichnet, daß mehrere parallele Luftkanäle (12), insbesondere nahe der dem Hohlprofil (2) zugewandten Oberfläche oder Anlagefläche der inneren Klemmbacke (5) angeordnet sind und in Zuführrichtung des Hohlprofiles (2) verlaufen und daß die diese Heißluftkanäle (12) enthaltende Klemmbacke (5) oder dergleichen mit ihrem die Mündungen (11) der Heißluftkanäle (12) oder Bohrungen aufweisenden Ende bis an oder nahe an das Widerlager (10) reicht.

14. Vorrichtung nach einem der Ansprüche 9 bis 13, dadurch gekennzeichnet, daß die Klemmbacke (5) oder dergleichen eine quer zu den insbesondere als Bohrungen ausgebildeten Heißluftkanälen (12) orientierte, mit diesen verbundene Zuführöffnung für die Heißluft hat und über eine Koppelung (14) mit einer Halterung (15) verbunden ist, in welcher eine Bohrung (16) oder ein Kanal für die Heißluftzufuhr angeordnet ist, die in Gebrauchsstellung mit der Zuführöffnung (13) der Klemmbacke (5) oder dergleichen ganz oder zumindest teilweise in Überdeckung ist, und daß die Klemmbacke (5) oder dergleichen gegebenenfalls zur Anpassung an unterschiedliche Abmessungen der zu biegenden Hohlprofile (2) austauschbar ist.

15. Vorrichtung nach einem der Ansprüche 9 bis 14, dadurch gekennzeichnet, daß die insbesondere als Bohrungen ausgebildeten parallelen Heißluftkanäle (12) für eine gleichmäßige Temperaturverteilung hinter der Anlagefläche der Klemmbacke (5) etwa gleichmäßig verteilt angeordnet sind.

16. Vorrichtung nach einem der Ansprüche 9 bis 15, dadurch gekennzeichnet, daß als Wärmetauscher (17) zum Aufheizen der Preßluft ein mit einer oder mehreren Heizspiralen oder Heizstäben versehener Block aus gut wärmeleitenden Werkstoff, insbesondere Metall, z.B. Aluminium oder dergleichen, vorgesehen ist, durch welchen eine Vielzahl von Bohrungen, Windungen oder dergleichen zum Leiten der Preßluft angeordnet ist.

17. Vorrichtung nach einem der Ansprüche 9 bis 16, dadurch gekennzeichnet, daß an der Außenseite der Biegestelle ein unter Anpreßdruck relativ zu dem Widerlager (10) und dem Hohlprofil (2) bewegbares und an die Außenseite des Profiles (2) anpreßbares und/oder unter Eindrückung des von ihm beaufschlagten äußeren Quer-Steges (6) zwischen die Seitenstege (11) des Hohlprofiles (2) eintauchendes Werkzeug insbesondere in Form einer wenigstens einen Teil des an der Außenseite der Biegung befindlichen Profilsteges beaufschlagenden Druckwalze, -rolle (21) oder dergleichen vorgesehen ist.

18. Vorrichtung nach einem der Ansprüche 9 bis 17, dadurch gekennzeichnet, daß hinter dem Biegebereich eine Kühlung beispielsweise mittels kalter Blasluft, angeordnet ist.

19. Vorrichtung nach einem der Ansprüche 9 bis 18, dadurch gekennzeichnet, daß die Zuleitung der Preßluft zu dem Wärmetauscher (17) - in Strömungsrichtung der Preßluft gesehen - vor diesem Wärmetauscher (17) Heizvorrichtung eine Abzweigung und eine Leitung aufweist, durch welche kühle Preßluft in den Bereich des Hohlprofiles (2) hinter der Biegestelle transportierbar ist.
